# EUROPEAN PATENT SPECIFICATION

(11) **EP 1 875 818 B1**
(45) Date of publication and mention of the grant of the patent: **15.08.2018**
(21) Application number: 07012563.8
(22) Date of filing: 27.06.2007
(51) Int. Cl.: A23L 3/00

(54) **System for creating a sterile barrier and lubricating and/or cooling moving parts in UHT sterilization plants**
System zur Erstellung einer sterilen Barriere und zur Schmierung und/oder Kühlung beweglicher Teile in Ultrahocherhitzungs-Sterilisationsanlagen
Système pour créer une barrière stérile et lubrifier et/ou refroidir des pièces en mouvement dans des usines de stérilisation UHT

(30) Priority: 03.07.2006 IT PR20060062
(43) Date of publication of application: 09.01.2008
(73) Proprietor: Interpump Group S.p.A., 42049 Sant'Ilario d'Enza (RE) (IT)
(72) Inventor: Catelli, Roberto, 43100 Parma (IT); Lazzari, Alessio, 43100 Parma (IT)
(74) Representative: Corradini, Cesare

(56) References cited:
- EP-A- 0 585 036
- WO-A-98/15342
- WO-A-03/077685
- WO-A-2007/068804
- DE-A1- 3 533 936
- DE-A1- 10 118 940
- GB-A- 2 380 474
- GB-A- 190 014 038
- JP-A- 2 095 491
- JP-A- 2001 179 059
- JP-A- 2005 081 231
- RU-C1- 2 108 296
- US-A- 5 282 967
- US-A- 5 778 971

## Description

The present invention relates to a system for creating a sterile barrier and lubricating and/or cooling moving parts in UHT sterilization plants, the sterile barrier being particularly interposed between the external environment and the internal aseptic circuits of the UHT plant and the moving parts, such as pistons of homogenizers, aseptic pumps, seals of centrifugal pumps and else.

The current system for creating the sterile barrier and for lubricating and/or cooling the moving parts operates by condensing steam using a heat exchanger and thus generating sterile condensate at 60/70°C with a cost of about € 0.026 per liter of condensate produced.

Several filtration system are also known in the relevant art.

For example, JPH0295491 relates to a method and apparatus for pasteurizing mineral water and removing bacteria.

DE3533936 is directed to a sterilising filtration process and water sterilisation apparatus therefor, in particular having a sterilising filter and/or a fine clarifying filter.

WO03077685 relates to a method of maintaining aseptic conditions in a juice plant in brief production stoppages.

RU2108296 deals with a method of production of packed-up potable water.

GB2380474 relates to a water processing apparatus.

WO9815342 discloses a water filtration device and method of its manufacture.

JP2001179059 relates to a filter of pathogenic microorganism.

DE10118940 is directed to a physical chemistry process removes all particulate and microbiological impurities from drinking water.

US5282967 deals with a method for feeding germ-free pure water.

WO2007068804 is directed to a system for filtering and removing viruses from water supply sources.

JP2005081231 relates to a method and apparatus for producing drinking water.

EP0585036 relates to an apparatus for producing ultra-pure water.

The drawbacks of prior art essentially include the production costs required for generating steam and later cooling it.

The object of this invention is to obviate the above drawbacks by using a system for creating a sterile barrier and lubricating and/or cooling which includes cold production of sterile water by filtration, in accordance with the annexed claims.

Its advantages may be summarized as follows:
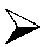 Reduction of production costs, thanks to the use of water without having to turn into steam,
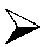 Lower plant maintenance requirements, thanks to the use of water at a lower temperature, i.e. 14/18°C, wherefore moving part seals exhibit longer lives, even twice as long, and maintenance costs are halved,
Reduced energy consumption in the plant, which results in reduced emission of exhaust gases of steam production boilers to the atmosphere,
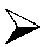 Full automation of both the sterilization and production steps.

These objects and advantages are achieved by the system for creating a sterile barrier and lubricating and/or cooling moving parts in UHT sterilization plants according to this invention, which is characterized by the annexed claims.

This and other features will be more apparent from the following description of a few variants of a preferred embodiment, which is shown by way of example and without limitation in the accompanying drawings, in which:

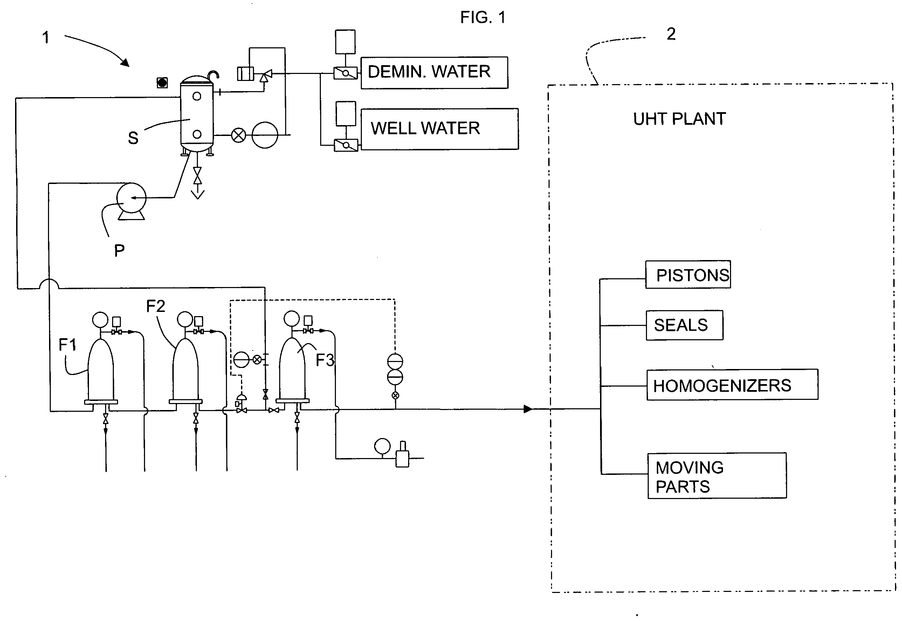

- Figure 1 schematically shows the operation of the system for creating a sterile barrier and lubricating and/or cooling moving parts in UHT sterilization plants.

Referring to Figure 1, numeral 2 and a corresponding dashed outline designate the area defined by a possible UHT sterilization plant.

This area may include many different elements, such as tanks for receiving the product, high and/or low pressure centrifugal pumps for feeding the product, product filters, shell-and-tube exchangers, steam injection sterilizers, holding tanks for maintaining a constant sterilization temperature, vacuum flash coolers, for instantaneous cooling, aseptic centrifugal pumps, aseptic homogenizers.

Also, there will be overpressure valves, homogenizing valves, thermistors, pressure gauges, pressure reducers, drives, electric motors.

Particularly the plant 2 has, distributed therein, homogenizer pistons, aseptic pumps, mechanical seals of centrifugal and lobed pumps and other moving parts, all requiring a sterile barrier to the outside, lubrication and cooling in a fully aseptic environment

While, as mentioned above, the prior art employs water obtained from evaporation, the present lubrication apparatus and system, designated by numeral 1, ensures creation of a sterile barrier as well as lubrication and/or cooling of all the above mentioned mechanical parts.

Generally, once the plant has reached the production temperature conditions, the product is fed to a constant level tank and is transferred, by the first centrifugal pump, to a shell-and-tube exchanger where it is heated to about 80/85° using the heat in the vapors extracted from the flash cooler.

From there it flows into a second shell-and-tube stabilizing exchanger, whereupon it flows into the injection head and is instantaneously heated to 150°C by direct steam injection.

After about 6 seconds in the tubular holding tank, whereupon sterilization occurs, the product flows into the flash cooler where instantaneous cooling by expansion, vapor extraction and restoration of the initial solid content, as well as removal of off flavors, occur.

Now, a second centrifugal pump, which also has sterility preserving equipment, feeds the product to the homogenizer to ensure that no phase separation occurs during extended preservation times.

The next steps are final cooling in a shell-and-tube exchanger using water, optional feeding to intermediate aseptic tanks or, at the end of the cycle, directly to aseptic packagers.

The above apparatus 2 and system for creating an aseptic barrier and lubricating, can create a sterile barrier and lubricate and/or cool the moving parts, such as pistons or centrifugal pumps or seals by only using cold-sterilized water, which is sterilized by suitable filters.

The system 1 operates by passing well or demineralized water through filters, here three filters, designated by references F1, F2, F3; said filters having an increasing filtering grade and the last filter being a bacteriological filter and then by transferring said filtered and sterilized water into all moving parts, such as the pistons of homogenizers, aseptic pumps, mechanical seals and else.

The filters F1, F2, F3 have air relief valves which allow the container to be entirely filled so that the filter can be entirely flooded with the sterilizing water.

The process for sterilizing the water producing plant for the sterile barrier and lubrication and/or cooling includes the step of collecting water in an appropriate tank S in which a predetermined amount of an antiseptic and antibacterial agent is added, in proportion to the tank capacity: the sterilizing solution will preferably be a 0.1 - 0.3% solution depending on the technical characteristics of the sterilizing product; in this step, the valves are held closed.

The process for sterilizing the sterile water production plant using chemical agents is carried out before starting the plant 2.

Then, as the shut-off valves are opened, the solution so obtained is transferred into the pump, through the filters F1, F2, F3 and then to all the pipes connected to the appropriate moving parts of the UHT sterilization plant, thereby sterilizing the entire line.

During sterilization of the lubrication system with aseptic cold water, a step is provided for checking that the antibacterial agent is actually present, which uses checking means or instruments attached to the connection pipes between the filters.

If a wrong signal is detected, the operator will receive an appropriate warning; in this case, the plant may be shut down or the sterilization process 2 may be repeated.

A flow rate regulator downstream from the bacteriological filter F3 defines, preferably using a feedback signal, the amount of water required by the units to be lubricated.

The system requires part of the solution to flow back into the tank, as shown by the presence of a return pipe C1, extending from upstream the filter F3 and connected to the tank, to provide recirculated sterilization.

After lubrication and/or cooling of the moving parts of the sterilization plant 2, the water will be discharged to the drain.

As sterilization with the solution is completed, only filtered water is introduced in the circuit of the plant 2.

While reference has been made herein to the use of three filters, one of which is a bacteriological filter, any number of filters may be obviously provided without departure from the inventive scope.

## Claims

1. An UHT food sterilization plant (2) comprising:
• a constant level tank;
• a first and a second shell-and-tube exchanger;
• a flash cooler;
• a piston-type homogenizer;
• a first centrifugal pump for transferring the product to be UHT-sterilized from said constant level tank to said shell-and-tube exchanger and a second centrifugal pump for feeding the product from said flash cooler to said homogenizer;
wherein said piston-type homogenizer and said pumps comprises moving parts requiring **a** sterile barrier from the outside, the plant (2) further comprising an apparatus (1) for creating said sterile barrier and lubricating and/or cooling said moving parts using cold water sterilized by filtration, **characterized in that** said apparatus comprises:
▪ a collecting tank for collecting water and an antiseptic and antibacterial product;
▪ filters (F1, F2, F3) having an increasing filtering grade and the last filter being a bacteriological filter (F3) ;
▪ shut-off valves that, when open, permits the transfer of water and of the antiseptic and antibacterial product from said tank (S) to said filters and to pipes connecting the apparatus to said moving parts;
▪ a flow rate regulator downstream said bacteriological filter;
▪ a return pipe (C1), extending from upstream said bacteriological filter (F3) and connected to said tank (S), to provide recirculated sterilization; and
▪ pipes connected to said moving parts to which the water and the antiseptic and antibacterial product are transferred.

2. The UHT food sterilization plant (2) according to claim 1, wherein said filters (F1, F2, F3) have increasing filtering grades, the last one being the bacteriological filter (F3).

3. The UHT food sterilization plant (2) according to claim 1 or 2, wherein said filters (F1, F2, F3) comprises air relief valves.

4. The UHT food sterilization plant (2) according to any of the preceding claims, wherein the apparatus (1) for creating said sterile barrier and lubricating and/or cooling said moving parts further comprises checking means for checking that the antibacterial agent is actually present.

## Patentansprüche

1. UHT-Lebensmittelsterilisationsanlage (2) umfassend:
- einen Konstantniveautank;
- einen ersten und einen zweiten Rohrbündelaustauscher;
- einen Flash-Kühler;
- einen Homogenisator vom Kolbentyp;
- eine erste Kreiselpumpe zum Übertragen des der UHT-Sterilisation zu unterziehenden Produkts aus dem Konstantniveautank zum Rohrbündelaustauscher und eine zweite Kreiselpumpe zum Zuführen des Produkts vom Flash-Kühler zum Homogenisator;
wobei der Homogenisator vom Kolbentyp und die Pumpen bewegliche Teile umfasst, die eine sterile Barriere gegenüber der Außenseite erfordern, wobei die Anlage (2) weiter eine Vorrichtung (1) zum Erzeugen der sterilen Barriere und Schmieren und/oder Kühlen der beweglichen Teile unter Verwendung von Kaltwasser umfasst, das durch Filtration sterilisiert ist, **dadurch gekennzeichnet,**
**dass** die Vorrichtung Folgendes umfasst:
- einen Sammeltank zum Sammeln von Wasser und eines antiseptischen und antibakteriellen Produkts;
- Filter (F1, F2, F3) mit einem zunehmend größeren Filtergrad, wobei der letzte Filter ein bakteriologischer Filter
(F3) ist;
- Sperrventile, die in geöffnetem Zustand die Übertragung von Wasser und des antiseptischen und antibakteriellen Produkts aus dem Tank (S) zu den Filtern und Rohren erlaubt, die die Vorrichtung mit den beweglichen Teilen verbinden;
- einen Durchflussregler stromabwärts des bakteriologischen Filters;
- ein Rücklaufrohr (C1), das sich von stromaufwärts des bakteriologischen Filters (F3) erstreckt und mit dem Tank (S) verbunden ist, um die rezirkulierte Sterilisation vorzunehmen; und
- Rohre, die mit den beweglichen Teilen verbunden sind, zu denen das Wasser und das antiseptische und antibakterielle Produkt übertragen werden.

2. UHT-Lebensmittelsterilisationsanlage (2), nach Anspruch 1, wobei die Filter (F1, F2, F3) zunehmend größere Filtergrade aufweisen, wobei der letzte ein bakteriologischer Filter (F3) ist.

3. UHT-Lebensmittelsterilisationsanlage (2) nach Anspruch 1 oder 2, wobei die Filter (F1, F2, F3) Luftablassventile umfasst.

4. UHT-Lebensmittelsterilisationsanlage (2) nach einem der vorstehenden Ansprüche, wobei die Vorrichtung (1) zum Erzeugen der sterilen Barriere und Schmieren und/oder Kühlen der beweglichen Teile ferner Prüfmittel umfasst um zu prüfen, ob das antibakterielle Mittel tatsächlich vorhanden ist.

## Revendications

1. Installation de stérilisation d'aliments UHT (2) comprenant :
- un réservoir à niveau constant ;
- un premier et un deuxième échangeur de chaleur à calandre ;
- un refroidisseur rapide ;
- un homogénéisateur de type à piston ;
- une première pompe centrifuge pour transférer le produit à stériliser UHT dudit réservoir à niveau constant audit échangeur de chaleur à calandre et une deuxième pompe centrifuge pour alimenter le produit dudit refroidisseur rapide audit homogénéisateur ;
dans laquelle ledit homogénéisateur de type à piston et lesdites pompes comprennent des parties mobiles nécessitant une barrière stérile par rapport à l'extérieur, l'installation (2) comprenant en outre un dispositif (1) pour créer ladite barrière stérile et lubrifier et/ou refroidir lesdites parties mobiles en utilisant de l'eau froide stérilisée par filtration, **caractérisé en ce que** le dispositif comprend :
- un réservoir collecteur pour collecter l'eau et un produit antiseptique et antibactérien ;
- des filtres (F1, F2, F3) ayant un degré de filtrage croissant et le dernier filtre étant un filtre bactériologique (F3) ;
- des vannes d'arrêt qui, quand elles sont ouvertes, permettent le transfert de l'eau et du produit antiseptique et antibactérien dudit réservoir (S) auxdits filtres et à des tuyaux connectant le dispositif auxdites parties mobiles ;
- un régulateur de débit en aval dudit filtre bactériologique ;
- un tuyau de retour (C1), s'étendant en amont dudit filtre bactériologique (F3) et connecté audit réservoir (S), pour fournir une stérilisation de recirculation ; et
- des tuyaux connectés auxdites parties mobiles auxquelles l'eau et le produit antiseptique et antibactérien sont transférés.

2. Installation de stérilisation d'aliments UHT (2) selon la revendication 1, dans laquelle lesdits filtres (F1, F2, F3) ont des degrés de filtrage croissants, le dernier filtre étant le filtre bactériologique (F3).

3. Installation de stérilisation d'aliments UHT (2) selon la revendication 1 ou 2, dans laquelle lesdits filtres (F1, F2, F3) comprennent des vannes de décharge d'air.

4. Installation de stérilisation d'aliments UHT (2) selon l'une quelconque des revendications précédentes, dans laquelle le dispositif (1) pour créer ladite barrière stérile et lubrifier et/ou refroidir lesdites parties mobiles comprend en outre des moyens de vérification pour vérifier que l'agent antibactérien est effectivement présent.
